# FASCICULE DE BREVET EUROPEEN

(11) **EP 1 701 274 B1**
(45) Date de publication et mention de la délivrance du brevet: **13.02.2008**
(21) Numéro de dépôt: 06110721.5
(22) Date de dépôt: 06.03.2006
(51) Int. Cl.: G06F 15/00

(54) **Architecture de noeud de communication dans un système de réseau sur puce globalement asynchrone**
Architektur eines Kommunikationsknoten in einem global asynchronen Netzwerk on-chip-System
Communication node architecture in a globaly asynchronous network on-chip system

(30) Priorité: 08.03.2005 FR 0550611
(43) Date de publication de la demande: 13.09.2006
(73) Titulaire: COMMISSARIAT A L'ENERGIE ATOMIQUE, 75015 Paris (FR); CENTRE NATIONAL DE LA RECHERCHE SCIENTIFIQUE (CNRS), 75016 Paris (FR)
(72) Inventeur: Beigne, Edith, 38112, MEAUDRE (FR); Vivet, Pascal, 38760, SAINT PAUL DE VARCES (FR); Renaudin, Marc, 38330, BIVIERS (FR); Quartana, Jérôme, 38100, GRENOBLE (FR)
(74) Mandataire: Poulin, Gérard

(56) Documents cités:
- BOLOTIN E ET AL: "Cost considerations in network on chip" INTEGRATION, THE VLSI JOURNAL, NORTH-HOLLAND PUBLISHING COMPANY. AMSTERDAM, NL, vol. 38, no. 1, octobre 2004 (2004-10), pages 19-42, XP004641563 ISSN: 0167-9260
- BYSTROV A ET AL: "Priority arbiters" ADVANCED RESEARCH IN ASYNCHRONOUS CIRCUITS AND SYSTEMS, 2000. (ASYNC 2000). PROCEEDINGS. SIXTH INTERNATIONAL SYMPOSIUM ON EILAT, ISRAEL 2-6 APRIL 2000, LOS ALAMITOS, CA, USA,IEEE COMPUT. SOC, US, 2 avril 2000 (2000-04-02), pages 128-137, XP010377322 ISBN: 0-7695-0586-4

## Description

### DOMAINE TECHNIQUE ET ART ANTÉRIEUR

La présente invention se rapporte au domaine des réseaux sur puce ou NoC (NoC ou « Network on Chip » selon la terminologie anglo-saxonne). Elle concerne une structure de réseau sur puce, dotée de noeuds asynchrones, communicant et fonctionnant sans l'aide d'une horloge.

Une proposition de réseau sur puce a par exemple été faite par Goossens et al. dans « Trade offs in the design of a router both guaranteed and best-efforts service for networks on chip », Proceedings of DATE conference, 2003, p 350-355. Dans ce document est décrit notamment une architecture de réseau sur puce doté d'un médium de communication avec une topologie de type matriciel ou de maillage. Ce médium de communication comporte des noeuds de routage susceptibles de réaliser deux types de routage différents. Un premier type de routage est mis en oeuvre pour permettre d'assurer un premier type de service dit de temps « de latence garantie » pour lequel le temps mis par des données allant d'une première ressource vers un deuxième ressource est sensiblement constant. Un deuxième type de routage est mis en oeuvre pour permettre d'assurer un deuxième type de service communément appelé « best effort », pour lequel on utilise au maximum la capacité des liens du réseau reliant les noeuds de routage. Dans cette architecture, l'accès au médium de communication est réglé par une horloge globale au réseau au moyen d'un multiplexage temporel (« time multiplexing » selon la terminologie anglo-saxonne). La mise en oeuvre d'une telle architecture peut s'avérer complexe, notamment en ce qui concerne le placement-routage de ses éléments, ainsi que la réalisation de son arbre d'horloge. La maîtrise de la consommation d'un tel réseau est également délicate, en particulier la maîtrise de la consommation due à l'arbre d'horloge.

Une proposition de réseau sur puce dans lequel les noeuds de routage communiquent entre eux de manière asynchrone a été faite par Brainbridge et S. Furber dans « Delay Insensitive System on Chip Interconnect » Using 1 of 4 Data Encoding », Proceedings of International Symposium on Advanced Research in Asynchronous Circuits and Systems, March 2001, pages 118 à 126. Les données transitant dans un tel réseau, sont par ailleurs codées au moyen d'un codage de type communément appelé « one hot encoding ». Ce réseau a cependant notamment pour inconvénient d'utiliser une logique spécifique, ce qui rend sa réalisation difficile. Par ailleurs, un tel réseau ne met pas en oeuvre des types de services différents, par exemple un service de latence « garantie » et un service communément appelé de « best effort ».

Les documents : «Quality of Service (QoS) for Asynchronous On-Chip Networks», T. Felicijan, S.B. Furber, Formal Methods for Globally Asynchronous Locally Synchronous Architecture (FMGALS 2003) Pisa, Italy, Sept. 2003*,* et «An Asynchronous On-Chip Network Router with Quality-of-Service (QoS), T. Felicijan, S.B. Furber, Support Proceedings IEEE International SOC Conference, Santa Clara, CA, Sept. 2004, pp. 274-277, ISBN: 0-7803-8445-8*,* proposent des méthodes de gestion de la qualité de service dans un réseau sur puce asynchrone, au moyens de canaux virtuels < insérer page 3a >.

Il se pose le problème de trouver une nouvelle structure de réseau sur puce au fonctionnement globalement asynchrone, dotée d'éléments, en particulier de noeuds qui ne font pas appel à une horloge pour gérer les transferts de données en son sein.

Une telle structure doit de préférence pouvoir mettre en oeuvre différents types de services, par exemple suivant que l'on souhaite privilégier un transfert rapide de données entre certaines ressources ou un transfert rapide de certaines données, ou bien que l'on souhaite obtenir un débit garanti entre certaines ressources ou pour certaines données.

### EXPOSÉ DE L'INVENTION

L'invention met en oeuvre une structure de réseau sur puce amélioré.

Elle concerne tout d'abord un procédé de transmission de données dans un réseau sur puce à protocole de communication asynchrone, ce réseau comportant un ou plusieurs noeuds et une ou plusieurs ressources, chaque noeud étant doté d'une ou plusieurs entrées associées à un ou plusieurs contrôleurs

Le document : Bolotin E et al : « Cost Considerations in Network on Chip », Integration, the VLSI Journal, North-Holland Publishing Company, Amsterdam, NL, volume 38, n°1, Oct. 2004, pp19-42 (D1), présente une architecture de réseau sur puce appelée QNoC pour Quality of Service NoC, comportant une grille de routeurs, reliés entre eux par des liaisons point à point.

Un paquet de données transitant dans un tel réseau est divisé en une pluralité de flits. Un transfert de flits entre deux routeurs du réseau sur puce, peut être effectué à l'aide d'un protocole dit par poignée de main (« handshake »). Différents niveaux de priorité peuvent être associés aux données transitant dans ce réseau. d'entrée, et d'une ou plusieurs sorties associées à un ou plusieurs contrôleurs de sortie, au moins un des noeuds fonctionnant sans horloge interne et déterminant une hiérarchie de transfert entre deux paquets de données à acheminer vers une même sortie, cette hiérarchie étant déterminée au moins en fonction d'une information de canal de priorité associée à chaque paquet de données, cette information de canal de priorité et ce paquet de données provenant d'un autre noeud ou d'une ressource du réseau, l'information de canal de priorité étant transmise par un signal de synchronisation d'un premier type suivant ledit protocole de communication asynchrone.

Le protocole de communication asynchrone peut être un protocole de haut niveau de type « send/accept », employé par les ressources et les noeuds du réseau pour effectuer des transmissions de données.

Le signal du premier type peut être un signal de type « send » ou d'émission, accompagnant chaque groupe élémentaire de données ou associé à chaque groupe élémentaire de données ou « flit » d'un paquet de données.

Selon l'invention, la synchronisation et le transfert des données sont effectués localement, au niveau du noeud asynchrone.

La structure de réseau sur puce suivant l'invention peut être implémentée en logique asynchrone, très peu sensible aux délais et robuste vis-à-vis de variations d'alimentation et de température.

De préférence, la hiérarchie de transfert est déterminée, lorsque les canaux de données priorité sont identiques, par affectation, à chaque paquet, d'un niveau de priorité fonction de son instant d'arrivée dans le noeud et/ou de l'entrée ou du port d'entrée par laquelle ce paquet parvient dans le noeud.

Selon un mode particulier de réalisation, lorsqu'un premier paquet est en cours de sortie du noeud, mais présente un niveau de priorité inférieur au niveau de priorité d'un deuxième paquet, dit paquet entrant, la sortie du premier paquet peut être interrompue ou stoppée, et le deuxième paquet peut être sorti prioritairement. Ainsi est assurée une transmission prioritaire des données de canal de priorité le plus élevé.

Des informations de routage, par exemple sous forme d'une liste ordonnée de données de directions, peuvent être associées à chaque paquet de données, une partie de ces informations de routage, par exemple une donnée de direction de la liste de données de directions, étant destinée à chaque noeud traversé.

De préférence, l'information de routage relative à un noeud est lue et utilisée dans ce noeud, les autres informations de routage, destinés aux noeuds non encore traversés, étant préparées, par exemple par décalage de la liste ordonnée de directions, pour la destination suivante du paquet de données dans le réseau.

Les informations de routage sont préférentiellement en début de paquet de données.

Ces informations de routage peuvent être en outre mémorisées dans un contrôleur d'entrée du noeud traversé en vue du transfert des données du contrôleur d'entrée vers un contrôleur de sortie.

Le noeud asynchrone peut avoir des moyens de mémorisation d'une information de routage du premier paquet dont la sortie est interrompue ou stoppée.

Un procédé selon l'invention peut en outre comporter l'envoi, par le noeud qui reçoit une donnée ou plusieurs données, vers l'élément dont il a reçu cette données ou ces données, d'un signal de synchronisation d'un deuxième type, par exemple un signal d'acceptation suivant ledit protocole de communication asynchrone, après réception et acceptation des données et du signal de synchronisation.

Le noeud n'envoie pas de signal d'acceptation pour des données auxquelles est affecté le canal de plus forte priorité, ce qui permet une gestion plus souple du système.

Le protocole de communication asynchrone peut être mis en oeuvre au moyen d'une signalisation bidirectionnelle de type requête/acquittement : toute action est acquittée par le récepteur afin que l'émetteur puisse émettre à nouveau.

Un réseau selon l'invention peut donc fonctionner en mettant également en oeuvre, un protocole asynchrone, bas niveau, de type « requête/acquittement ».

De préférence, dans un tel procédé, les signaux de synchronisation du protocole de communication asynchrone, sont implémentés au moyen d'un protocole requête/acquittement quatre phases, et d'un codage multi-rails.

Le noeud asynchrone peut être réalisé de manière quasi insensible aux délais en utilisant par exemple ce protocole 4 phases et ce codage multi-rails.

Dans un procédé selon l'invention, le contrôleur d'entrée envoie, lorsqu'il reçoit un début de paquet de données à transmettre, un signal, dit de validité, au contrôleur de sortie de la sortie vers laquelle les données du paquet doivent être transmises, ce signal de validité comportant des données relatives au canal de priorité dudit paquet de données à transmettre.

Le contrôleur de sortie, après réception du signal de validité, incorpore alors une requête de début de paquet, d'un paquet de données ne faisant pas partie des paquets de données les plus prioritaires dans une file d'attente de requêtes de début de paquet, de paquets de données de même canal de priorité.

Le contrôleur de sortie, après réception du signal de validité, surveille des registres du contrôleur d'entrée dans lesquels sont stockés les données en fonction de leur canal de priorité.

Le contrôleur d'entrée peut mémoriser les données de canal de priorité en vue du transfert des données vers le contrôleur de sortie.

L'invention concerne également un dispositif de transmission de donnés comportant un réseau sur puce à protocole de communication asynchrone, ce réseau comportant un ou plusieurs noeuds et une ou plusieurs ressources, chaque noeud étant doté d'une ou plusieurs entrées associées à un ou plusieurs contrôleurs d'entrée, et d'une ou plusieurs sorties associées à un ou plusieurs contrôleurs de sortie, au moins un des noeuds fonctionnant sans horloge interne, chacun des contrôleurs d'entrée de ce noeud comportant :
- des moyens pour déterminer une hiérarchie de transfert entre au moins deux paquets de données à acheminer vers une même sortie, cette hiérarchie étant déterminée au moins en fonction d'une information de canal de priorité associée à chaque paquet de données,
- des moyens pour recevoir un signal de synchronisation, comportant une information de canal de priorité, et des paquets de données d'un autre noeud ou d'une ressource du réseau.

Un tel dispositif comporte en outre des moyens pour déterminer la hiérarchie de transfert, et comporte des moyens pour affecter à chaque paquet de données, lorsque les canaux de priorité sont identiques, un niveau de priorité fonction de son instant d'arrivée dans le noeud et/ou de l'entrée ou du port d'entrée dans le noeud. Ces moyens peuvent être implantés dans les contrôleurs de sortie du noeud.

Des moyens peuvent en outre être prévus pour interrompre ou suspendre la sortie d'un premier paquet lorsque ce premier paquet est en cours de sortie du noeud, mais présente un niveau de priorité inférieur au niveau de priorité d'un deuxième paquet, dit paquet entrant, et pour sortir le deuxième paquet prioritairement. Ces moyens peuvent être également implantés dans les contrôleurs de sortie du noeud.

Le dispositif selon l'invention peut en outre comporter des moyens pour décoder des informations de routage, par exemple sous forme d'une liste ordonnée de données de directions, associées à chaque paquet de données, une partie de ces informations de routage étant destinée à chaque noeud traversé.

Des moyens peuvent être prévus pour lire l'information de routage relative à un noeud, ainsi que des moyens pour préparer pour la destination suivante du paquet de données dans le réseau les autres informations de routage. Dans un cas, par exemple, où les informations de routage se trouvent sous forme d'une liste ordonnée de données de directions, ces moyens peuvent être mis en oeuvre pour décaler la liste ordonnée de direction, pour une destination suivante du paquet, par exemple un noeud voisin.

Des moyens permettent de mémoriser des informations de routage dans le contrôleur d'entrée d'un noeud traversé, en vue du transfert des données du contrôleur d'entrée vers le contrôleur de sortie.

Le noeud asynchrone a de préférence des moyens de mémorisation d'une information de routage du premier paquet dont la sortie est interrompue ou stoppée.

Selon un mode de réalisation préféré, il comporte en outre des moyens pour envoyer, lorsqu'il reçoit une donnée ou plusieurs données, vers l'élément dont il a reçu cette données ou ces données, un signal d'acceptation après réception du signal de synchronisation du premier type ou signal d'émission correspondant et acceptation des données.

De préférence, le contrôleur d'entrée comporte des moyens pour envoyer, lorsqu'il reçoit un début de paquet de données à transmettre, un signal, dit de validité, au contrôleur de sortie de la sortie vers laquelle les données doivent être transmises, ce signal de validité comportant des données relatives au canal de priorité desdites données à transmettre.

Dans un noeud asynchrone d'un dispositif selon l'invention, le contrôleur de sortie peut comporter des moyens pour, après réception du signal de validité, incorporer une requête de début de paquet d'un paquet de données ne faisant pas partie des paquets de données de canal de priorité le plus élevé, dans une file d'attente de requêtes de début de paquet, appartenant à des paquets de données de même canal de priorité.

Le contrôleur de sortie peut en outre comporter des moyens pour, après réception d'un signal de validité, surveiller des registres du contrôleur d'entrée dans lesquels sont stockés des données en fonction de leur canal de priorité.

Il peut en outre comporter des moyens pour mémoriser des données de canal de priorité en vue du transfert des données vers le contrôleur de sortie.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- les figures 1A, 1B représentent respectivement des exemples d'architecture de réseau sur puces mises en oeuvre suivant l'invention ;
- la figure 2 représente un exemple de chronogramme illustrant un mécanisme de synchronisation, à l'aide d'un protocole de communication de type « send/accept», dans un réseau sur puce mis en oeuvre suivant l'invention, entre un élément émetteur de données et un élément récepteur desdits données ;
- les figures 3 et 4 représentent respectivement un exemple de transfert selon un protocole à 4 phases, et des signaux de codage double rail ;
- la figure 5 représente un exemple de structure de noeud asynchrone dans un réseau sur puce mis en oeuvre suivant l'invention,
- les figures 6 et 7 représentent respectivement un contrôleur d'entrée et un contrôleur de sortie d'un noeud asynchrone suivant l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

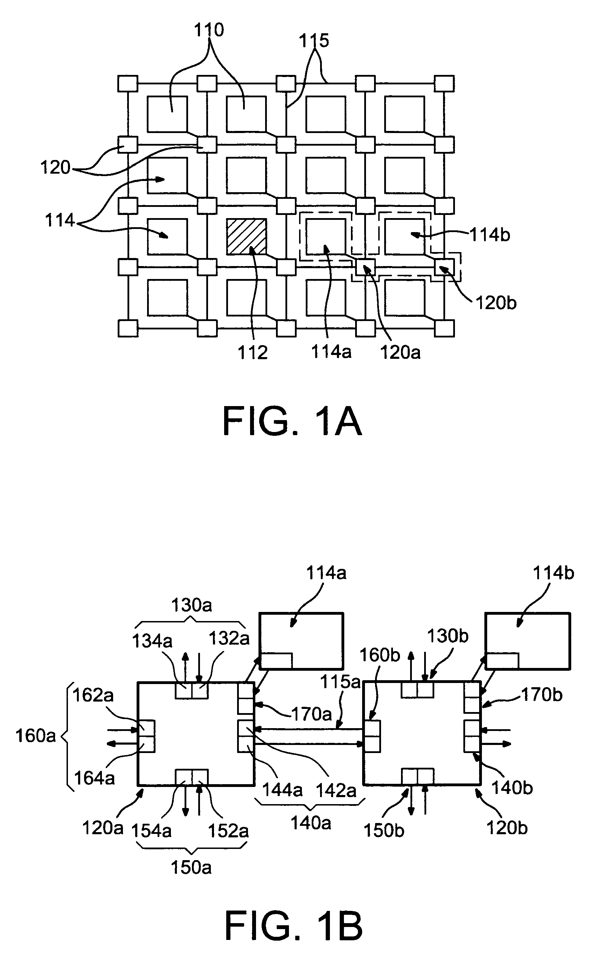

La figure 1A représente un exemple d'architecture de communication ou réseau sur puce (NoC pour « network on Chip » selon la terminologie anglo-saxonne) mise en oeuvre suivant l'invention et dotée d'une topologie de type matriciel ou de « maillage ».

Cette architecture comprend une pluralité d'éléments référencés 110 aptes à effectuer des traitements de données, et à communiquer entre eux en s'échangeant des données.

Parmi l'ensemble des éléments 110 compris dans une telle architecture, peut figurer un élément noté 112 jouant le rôle de maître et permettant notamment d'initier les communications sur le réseau. Cet élément 112 que l'on nommera « contrôleur de réseau », a ainsi la possibilité de programmer les communications entre une pluralité d'autres éléments du réseau que l'on nommera « ressources » 114a, b et qui permettent quant à elles de réaliser des tâches telles que des traitements de données élémentaires, par exemple des calculs, ou des stockages de données, ou des codages/décodages de données.

Le contrôleur de réseau 112 peut se présenter par exemple sous forme d'un processeur ou d'un microcontrôleur. Ce dernier peut également avoir pour fonction, notamment, celles d'effectuer des calculs et de gérer des interruptions.

Chacune des ressources 114a, b peut être de type générique, par exemple sous forme d'un processeur ou d'un DSP (DSP pour « Digital Signal Processor » ou « processeur de signal numérique ») ou de type spécifique comme une mémoire, par exemple de type SRAM (SRAM pour « static random access memory » ou « mémoire vive statique »).

Ce peut être encore un module de traitement spécialisé, tel que par exemple un module spécialisé dans le calcul d'une FFT (FFT pour Fast Fourier Transform ou « transformée de Fourier rapide ») ou encore un module codeur ou/et décodeur MPEG (MPEG pour « moving pictures expert groups »).

Les ressources 114a, b du réseau sont reliées entre elles et s'échangent entre elles des données par l'intermédiaire d'un médium de communication comportant des liens 115 bidirectionnels, formés d'une ou plusieurs liaisons assurant un transfert des données dans une direction et d'une ou plusieurs autres liaisons assurant un transfert des données dans une direction opposée.

Le réseau comporte en outre des noeuds 120. Ces noeuds 120 permettent d'établir une connexion physique, entre une ou plusieurs liaisons entrantes et une ou plusieurs liaisons sortantes, ainsi qu'un aiguillage des communications entre les ressources 114.

Avec la topologie dite « de maillage » ou matricielle illustrée sur le figure 1A, chaque noeud 120 est relié à quatre autres noeuds voisins et est relié ou associé à une des ressources 114.

Cette architecture de réseau a un fonctionnement du type globalement asynchrone localement synchrone (GALS) : la communication entre les différentes ressources est asynchrone.

Selon une possibilité de mise en oeuvre, les ressources 114a, b de la structure de réseau peuvent être des unités synchrones du réseau, régies respectivement par une horloge. Les horloges respectives des ressources peuvent être éventuellement distinctes ou indépendantes entre elles.

Le médium de communication du réseau, et en particulier les noeuds 120, peut quant à lui être implémenté en logique asynchrone. Un ou plusieurs ou tous les noeuds 120 du réseau sont dépourvus d'horloge et ont un fonctionnement asynchrone.

En ce qui concerne l'aiguillage des données dans le réseau, les noeuds 120 permettent d'effectuer un routage de données.

Ainsi un noeud du réseau peut déterminer, à l'aide de données dites de routage contenues dans un paquet de données reçues, vers quel lien, ou vers quel noeud voisin du réseau, transmettre ou envoyer ce paquet de données qu'il reçoit.

Le routage effectué au sein des noeuds du réseau est par exemple de type déterministe. Dans ce cas, chaque noeud du réseau est apte à effectuer un routage d'un paquet de données uniquement ou principalement en fonction d'informations de routage, contenues dans le paquet de données qu'il reçoit. Ces informations de routage indiquent le trajet, par exemple sous forme d'une liste ordonnées de directions à emprunter, que ce paquet de données est destiné à emprunter dans le réseau et peuvent avoir été introduites dans le paquet ou avoir été affectées au paquet par une ressource du réseau ayant émis ce paquet.

Un ou plusieurs noeuds 120 du réseau sont également aptes à effectuer un arbitrage des données, c'est-à-dire à déterminer, parmi plusieurs paquets de données qu'il reçoit, quel paquet de données transmettre ou transférer en premier.

Un noeud asynchrone du réseau peut donc être prévu pour gérer d'éventuels conflits entre des données lui parvenant, et déterminer parmi plusieurs données ou paquets de données lui parvenant, et destinées à emprunter une même sortie de ce noeud ou un même lien rattaché à ce noeud, quel paquet de données transmettre en premier vers cette sortie ou vers ce lien.

L'architecture de réseau sur puce mise en oeuvre suivant l'invention n'est pas limitée à la topologie de maillage illustrée sur la figure 1A et peut avoir une toute autre topologie, par exemple une topologie de type hypercube, arbre, anneau, ou tore, etc....

La figure 1B, représente une portion du réseau décrit précédemment en liaison avec la figure 1A, et en particulier un premier noeud 120a et un deuxième noeud 120b, voisins l'un de l'autre, chacun étant dépourvu d'une horloge interne.

Le premier noeud 120a et le deuxième noeud 120b, sont reliés respectivement à une première ressource 114a et à une deuxième ressource 114b et comprennent chacun 5 modules d'entrées/sorties prévus pour recevoir et/ou émettre des données et/ou des signaux de synchronisation, dont un module « nord » noté respectivement 130a pour le premier noeud, et 130b pour le deuxième noeud, un module « est » 140a, 140b, un module « sud » 150a, 150b, un module « ouest » 160a, 160b. Ces modules d'entrée/sortie sont reliés à d'autres noeuds du réseau. Un module d'entrées/sorties 170a, 170b est relié respectivement à une ressource 114a, 114b.

Dans cette configuration, chaque noeud comporte 5 entrées (notées 132a,b 142a,b 152a,b 162a,b 172a,b pour le premier noeud 120a), ainsi que 5 sorties (notées 134a,b 144a,b 154a,b 164a,b 174a,b pour le premier noeud 120a).

Chaque noeud comporte 5 contrôleurs d'entrées et 5 contrôleurs de sorties.

Chaque entrée est connectée à seulement 4 sorties parmi les 5 sorties, sachant que l'aller-retour sur un même module d'entrée/sortie n'est pas autorisé. Un contrôleur d'entrée détecte la présence de nouvelles données à traiter et transfère ces données vers une sortie en fonction du routage indiqué dans les données, de préférence dans l'en-tête du paquet en cours.

Dans l'une ou l'autre des architectures qui ont été décrites précédemment, les données échangées entre ressources 114a,b et qui transitent par les liens 115a,b et les noeuds 120a,b peuvent être sous forme de paquets de données.

Un paquet est formé d'un groupe de données communément appelé « flit », ou de plusieurs groupes de données ou « flits » successifs destinés à emprunter un même trajet.

Un flit est l'unité élémentaire de transmission de données dans le réseau. A un flit ou groupe élémentaire de données correspond une capacité d'un lien 115 ou un nombre de connexions physiques ou de liens filaires comprises dans un lien 115.

Un paquet de données circulant dans le réseau comprend généralement au moins un flit désignant son en-tête, ainsi qu'au moins un flit désignant sa fin, et éventuellement un ou plusieurs flits intermédiaires entre le flit d'en-tête et le flit de fin.

Un paquet de données peut éventuellement être formé d'un seul groupe élémentaire de données ou d'un seul flit. Dans ce cas, ce flit unique désigne à la fois l'en-tête et la fin du paquet.

Un groupe élémentaire de données ou flit comporte en général plusieurs bits, par exemple 34 bits, et notamment des bits dits « d'information », permettant de désigner la position de ce flit dans un paquet.

Un premier bit d'information, dit bit « BoP » (BoP pour « begin of packet » ou « début de paquet »), peut par exemple servir à désigner si, oui ou non, le flit auquel ce bit « bop » appartient est un flit de début d'un paquet.

Un autre bit d'information dit, bit « EoP » (eop pour « end of packet » ou « fin de paquet »), peut par exemple servir quant à lui à désigner si, oui ou non, le flit auquel ce bit appartient, est un flit de fin de paquet.

Un flit d'un paquet de données peut comporter également, mis à part les bits d'information, plusieurs autres bits de données, comportant par exemple des informations relatives à un calcul et/ou à un traitement de données et/ou des informations d'adresse, et/ou des informations de programmation destinées à configurer le fonctionnement d'une ressource 114.

Un flit d'en-tête d'un paquet de données comporte quant à lui, mis à part les bits d'information de position, plusieurs bits spécifiques que l'on appellera bits de « contrôle de message » (« message control » selon la terminologie anglo-saxonne), permettant d'indiquer la nature du paquet, selon que ce paquet correspond à un paquet de lecture, d'écriture, ou d'interruption.

Un flit d'en-tête d'un paquet de données comporte également plusieurs autres bits spécifiques de routage, par exemple 18 bits de routage, encore appelés bits de « chemin vers la cible » (« path to target » selon la terminologie anglo-saxonne).

Dans le flit d'en-tête les bits de chemin vers la cible indiquent le chemin que le paquet de données auquel appartient ce flit d'en-tête est destiné à emprunter dans le réseau. Ce chemin peut être par exemple sous forme d'une liste ordonnée de données de directions, ou d'une liste ordonnée désignant la succession de modules d'entrées/sorties que le paquet est destiné à emprunter.

Un noeud peut être mis en oeuvre pour, d'une part, utiliser une partie de la liste de données de directions définissant le chemin à suivre, par exemple deux bits de poids faibles du « chemin vers la cible », et pour, d'autre part, effectuer un routage du paquet vers un de ses modules et pour décaler la liste pour le noeud suivant.

Un codage utilisant « 00 » pour désigner un module d'entrées/sorties « nord », « 01 » pour désigner un module d'entrées/sorties « est », « 10 » pour désigner un module d'entrées/sorties « sud », et « 11 » pour désigner un module d'entrées/sorties « ouest » peut être par exemple utilisé.

Pour permettre notamment de réduire le nombre de bits de routage dans un paquet, un codage spécifique des bits de routage peut être employé pour indiquer à un noeud d'effectuer le routage d'un paquet de données vers une ressource. Deux données consécutives identiques dans une liste ordonnée de direction peuvent par exemple désigner une ressource.

Comme indiqué plus haut, en ce qui concerne le routage des paquets de données dans le réseau, ce dernier peut être de type déterministe. Ainsi, une ressource, avant d'émettre un paquet de données, peut établir un chemin que ce paquet de données est destiné à emprunter. Pour cela la ressource attribue ou affecte une valeur aux bits de « chemin vers la cible », du flit d'en-tête du paquet de données qu'elle émet.

Le flot de données destiné à traverser l'un ou l'autre des réseaux précédemment décrits lors du déroulement d'un traitement ou d'une application, peut être de type communément appelé « wormhole », tel que décrit par exemple dans le document : « A survey and comparison of wormhole routing technique in Mesh networks, K.M. Al-Tawil and al., IEEE network, March-April 1997, pp38-45*).* Pour un tel type de flots de données, dans un paquet de données émis par une ressource émettrice vers une ressource réceptrice, le flit d'en-tête effectue en premier le chemin entre la ressource émettrice et la ressource réceptrice, puis suivent éventuellement un ou plusieurs flits intermédiaires, répartis dans des noeuds du réseau déjà empruntés par le flit d'en-tête. Le flit de fin ferme quant à lui le chemin emprunté par le flot de données.

Les paquets de données transitant dans le réseau peuvent être chacun associés à un canal de priorité appelé « canal virtuel » choisi parmi une liste prédéterminée d'un ou plusieurs canaux virtuels différents, par exemple de deux canaux virtuels différents ou de trois canaux virtuels différents. Chaque canal virtuel est relatif à un niveau de priorité ou un numéro de priorité, et confère un degré de priorité à un paquet de données auquel il est associé, notamment en ce qui concerne l'arbitrage de l'ordre de transfert du paquet, lorsque ce paquet parvient à un noeud du réseau.

Au niveau par exemple d'un premier noeud du réseau, un premier paquet de données accédant à ce premier noeud, et associé par exemple à un premier canal, de niveau de priorité donné, pourra être transféré en sortie de ce premier noeud, prioritairement par rapport à un autre paquet de données associé par exemple à un deuxième canal, de niveau de priorité inférieur à celui du premier canal, en particulier dans un cas où le premier paquet et l'autre paquet s'apprêtent à accéder à une même sortie du premier noeud.

Selon une possibilité d'implémentation des canaux virtuels, il peut être prévu k canaux virtuels différents (avec k un nombre entier supérieur à 2), par exemple un premier canal ou canal 0 de niveau de priorité le plus élevé, un deuxième canal ou canal 1 de niveau de priorité inférieure à celle du premier canal, un troisième canal ou canal 2 de niveau de priorité inférieure à celle du premier canal et du deuxième canal, etc.

Les canaux virtuels peuvent permettre d'assurer différents services de transferts de données dans le réseau, par exemple au moins un service dit de « best effort » ou « meilleur effort » pour lequel la bande passante ou l'accès au réseau est partagé ou distribué de manière sensiblement équitable entre les ressources, et au moins un service dit de « latence garantie » pour lequel des données associées à ce service sont transférées dans le réseau par exemple d'une première ressource à une deuxième ressource, selon une durée de transfert, de préférence constante ou variant peu.

Ainsi, pour une implémentation avec deux canaux virtuels, le canal de priorité le plus élevé, par exemple le premier canal, peut être utilisé pour permettre d'assurer un service de latence garantie, tandis que le deuxième canal, de niveau de priorité inférieur à celui du premier canal, peut être utilisé pour permettre d'assurer un service de type « best effort ».

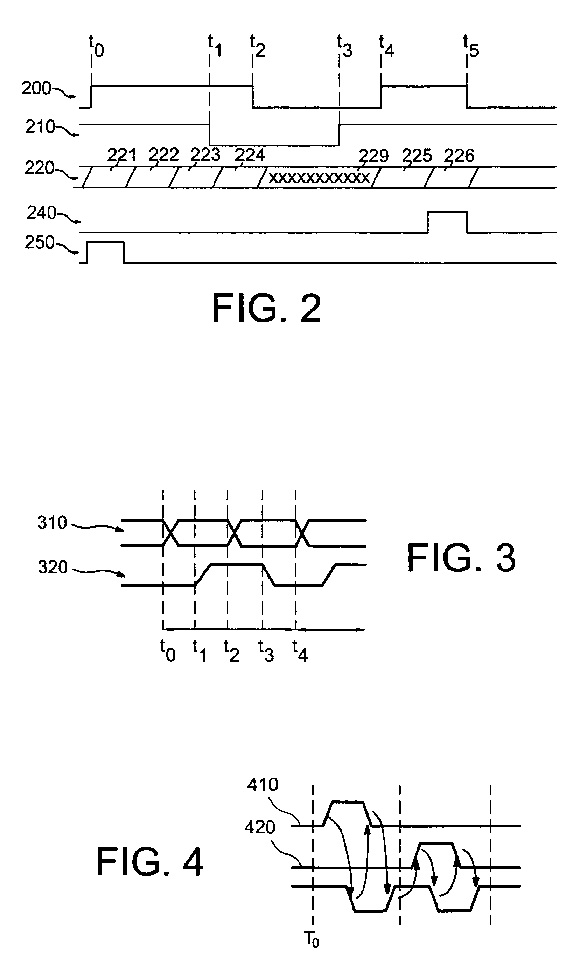

L'information de canal de priorité est associée à un paquet de données à l'aide d'au moins un signal de synchronisation, suivant un protocole de communication qui sera décrit plus loin, en liaison avec la figure 2.

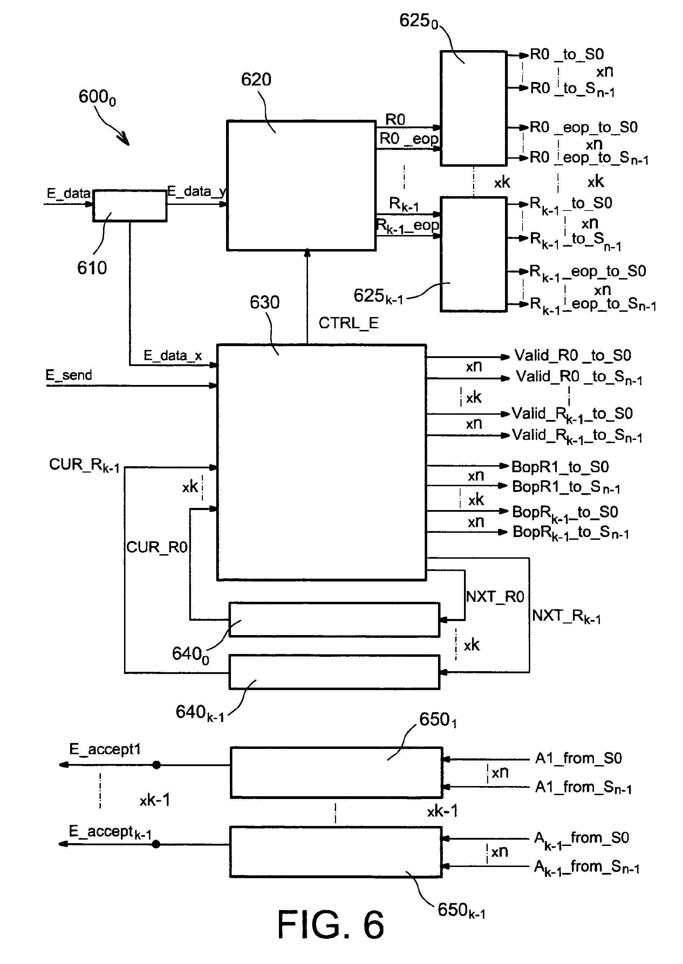

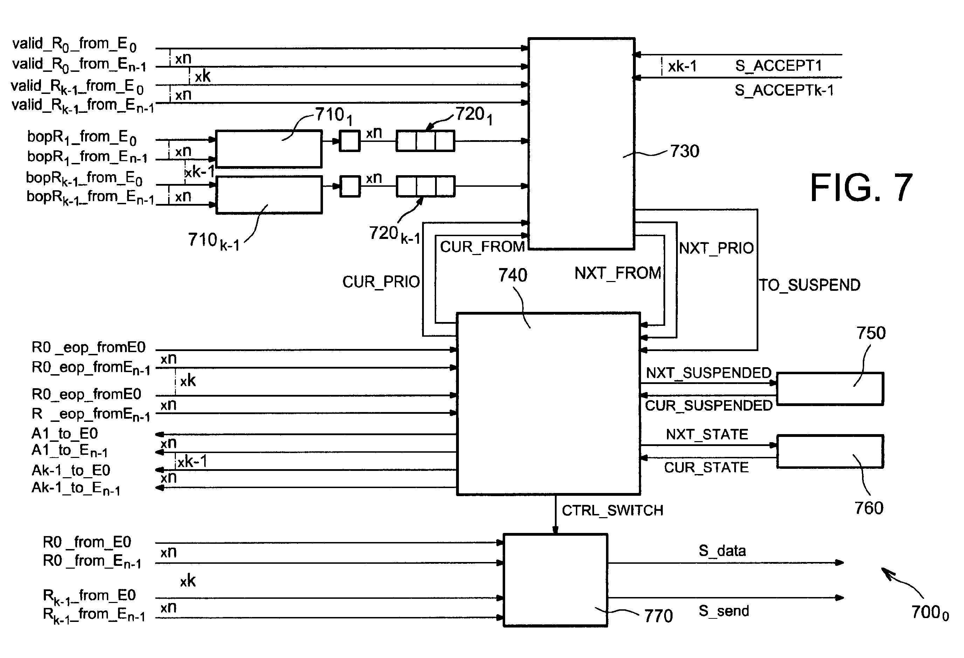

L'ordre de transfert entre des paquets de données associés à des canaux de priorité différents peut être réalisé par des moyens d'un noeud asynchrone, en particulier un contrôleur d'entrée et un contrôleur de sortie de ce noeud, en fonction des informations des canaux de priorité. Des exemples de tels contrôleurs seront décrits plus loin, en liaison avec les figures 6 et 7.

Il peut être également prévu que deux paquets de données associés à un même canal de priorité, par exemple un premier paquet associé au premier canal et un deuxième paquet également associé au premier canal, ne se coupent pas mutuellement, notamment lorsque ces paquets accèdent à un même noeud du réseau.

L'ordre de transfert entre plusieurs paquets de données, lorsque ces paquets sont associés à des canaux des priorités identiques, n'est pas imposé et peut être par exemple réalisé à l'aide d'un arbitrage « dynamique », par exemple de type « premier arrivé premier servi » ou FIFO (FIFO pour « first in first out »).

Un ordre de transfert au moyen d'un arbitrage de type « statique », peut être également employé. Pour un tel type d'arbitrage, le noeud prend en compte de quel noeud voisin proviennent respectivement lesdits paquets de données ou de laquelle de ses entrées sont respectivement parvenus les paquets. Ce type d'arbitrage statique peut être employé notamment en complément de l'arbitrage effectué à l'aide des canaux virtuels, par exemple pour déterminer l'ordre de transfert entre plusieurs paquets différents associés à un même canal virtuel et arrivant simultanément ou sensiblement en même temps au noeud. Un tel arbitrage statique peut être par exemple de type « nord/est/sud/ouest », pour lequel un paquet provenant de l'entrée « nord » du noeud est prioritaire par rapport à un deuxième paquet de même canal virtuel arrivant en même temps que le premier paquet à l'entrée « est » du noeud, le deuxième paquet étant lui-même prioritaire par rapport à un troisième paquet de même canal virtuel arrivant en même temps que le deuxième paquet à l'entrée « sud » du noeud.

Plus généralement il est possible de réaliser un arbitrage entre différents paquets ayant des canaux de priorité identiques, en fonction des origines respectives des paquets de données.

Un fonctionnement possible du noeud, par exemple le noeud 120a de la figure 1B peut être le suivant : à l'arrivée d'un flit d'en-tête d'un premier paquet de données, par une entrée de ce noeud 120a, la sortie du noeud que ce premier paquet est destiné à emprunter, est déterminée en fonction des informations de routage comprises dans l'en-tête dudit premier paquet. Une fonction d'arbitrage est activée, en fonction de ces informations de routage et du canal de priorité auquel ce premier paquet est associé.

Dans un cas où il n'y a pas de conflit sur ladite sortie, et que par exemple aucun autre paquet n'emprunte cette sortie ou ne s'apprête à emprunter cette sortie, le premier paquet est transmis ou transféré vers cette sortie.

Dans un cas où il y a un conflit d'accès sur ladite sortie, un premier paquet empruntant déjà une sortie du noeud, et un deuxième paquet de canal virtuel de priorité supérieur à celui du premier paquet arrivant dans le noeud pour la même sortie, le transfert du premier paquet en sortie du noeud 120a est bloqué ou stoppé pour transférer le deuxième paquet. Le transfert du premier paquet peut reprendre quand tous les flits dudit deuxième paquet ont traversé le noeud 120a.

Dans un autre cas où il y a un conflit sur ladite sortie et, par exemple, où un autre flit d'en tête d'un deuxième paquet appartenant au même canal virtuel que le premier paquet s'apprête à emprunter cette sortie en même temps que le premier paquet, un arbitrage statique ou fonction de l'origine des paquets ou de leur entrée dans le noeud peut être réalisé entre les paquets. Par exemple, il s'agit d'un arbitrage de type « nord », « est », « sud », « ouest ».

L'information de canal de priorité auquel un paquet de données est susceptible d'être associé, peut être contenue, au moins partiellement, dans des signaux de synchronisation d'un protocole de communication de haut niveau de type « send/accept » mis en oeuvre pour permettre d'effectuer des transferts de données entre les éléments, noeuds ou/et ressources, du réseau.

Un mécanisme de transfert de données entre un élément du réseau émetteur de données, par exemple un premier noeud ou une ressource et un élément du réseau récepteur des données, par exemple un deuxième noeud voisin du premier noeud, est illustré par le chronogramme de la figure 2. Le transfert de données entre l'élément émetteur et l'élément récepteur est réglé par un protocole de haut niveau de type « send/accept », mettant en oeuvre des signaux de synchronisation de type « send » ou signaux d'émission, ainsi que des signaux de synchronisation de type « accept » ou signaux d'acceptation, pour lequel un flit donné ou un groupe élémentaire de données d'un paquet de données peut être émis par l'élément émetteur dès lors qu'un autre flit, précédant ce flit donné dans ledit paquet, a été accepté par l'élément récepteur.

Les courbes 200 et 210 du chronogramme sont représentatives de signaux de synchronisations échangés par l'élément émetteur et l'élément récepteur. La courbe 220, est quant à elle représentative de données échangée entre l'élément émetteur et l'élément récepteur.

Sur ce chronogramme, un signal d'émission 200 que l'on appellera signal « send » et qui provient de l'élément émetteur, annonce à un instant t₀, lorsque ce signal « send » passe par exemple à un état haut, que des données sont émises vers l'élément récepteur. Un signal d'acceptation 210 que l'on appellera signal « accept », provenant de l'élément récepteur, indique quant à lui, par exemple en étant à un état haut à cet instant t₀, que l'élément récepteur est apte à recevoir ces données. Ainsi, comme l'indique respectivement les courbes 220 et 230, un premier groupe de données ou premier flit est émis par l'élément émetteur et reçu par l'élément récepteur (le premier flit étant représenté par une portion 221 de la courbe 220).

Une courbe 250 du chronogramme, représentative d'un signal « bop », passe quant à elle à un état haut à l'instant t₀ et reste à l'état haut durant la durée du premier flit. Ce signal « bop » indique que le premier flit est un flit d'en tête. Un deuxième flit, puis un troisième flit sont ensuite envoyés par l'élément émetteur et reçus par l'élément récepteur (le deuxième flit et le troisième flit étant représentés respectivement par des portions 222 et 223 de la courbe 220).

A un instant t₁, le signal « accept » 240 émis par l'élément récepteur change d'état, et passe par exemple à un état bas. L'élément récepteur cesse alors de recevoir des données. L'élément émetteur fait une tentative d'envoi d'un quatrième flit (portion 224 de la courbe 220) mais l'élément récepteur ne renvoie pas à l'élément émetteur de signal d'acceptation de ce quatrième flit. Dans un cas, par exemple, où l'élément récepteur est un noeud synchrone, ce noeud peut recevoir et enregistrer le quatrième flit, en attendant de l'utiliser. Dans un autre cas, par exemple, où l'élément récepteur est un noeud asynchrone, ce noeud peut maintenir dans l'élément émetteur le quatrième flit, en n'acquittant pas ce quatrième flit.

A la suite de cette tentative d'envoi, à un instant t₂, l'élément émetteur cesse alors d'envoyer des données (portion 229 de la courbe 220).

L'élément récepteur est à nouveau prêt à recevoir des données à partir d'un instant t₃. Cela est indiqué par le signal « accept » (courbe 210), qui change d'état et passe par exemple à l'état haut. A partir de cet instant t₃, l'élément récepteur indique qu'il accepte alors le quatrième flit (portion 234 de la courbe 230). L'élément émetteur peut alors ensuite émettre à nouveau des données. A partir d'un instant t₄, l'élément émet un quatrième flit (portion 225 de la courbe 220) puis un cinquième flit (portion 226 de la courbe 220) qui sont alors reçus par l'élément récepteur. Comme l'indique la courbe 240 représentative d'un signal « eop » (eop pour « end of packet » ou fin de paquet), le cinquième flit marque la fin du paquet et de l'émission de donnée à un instant t₅.

En d'autres termes, les envois de données entre un premier élément et un noeud asynchrone sont gérés par un protocole send/accept. Dans le mécanisme de transmission qui vient d'être décrit, l'élément émetteur et l'élément récepteur communiquent par le biais de modules d'entrées/sorties, dont les échanges sont gérés, au niveau des couches physiques par une signalisation bidirectionnelle de type « requête/acquittement ».

Cette signalisation bidirectionnelle peut être mise en oeuvre au moyen d'un protocole de bas niveau, « quatre phases » également appelé « full handshake ».

Un fonctionnement de ce protocole est illustré par le chronogramme de la figure 3. La courbe 310 de ce chronogramme est représentative de signaux de données dans lesquels figurent des signaux de requête, produits par l'élément émetteur, tandis que la courbe 320 est représentative de signaux d'acquittement produits par l'élément récepteur.

Selon une première phase, entre un instant t₀ et un instant t₁, l'élément récepteur détecte une arrivée de nouvelles données, arrivée représentée par un changement d'état de la courbe 310, et effectue une acquisition de ces données. Cet élément récepteur génère ensuite, comme cela est montré par le changement d'état de la courbe 320 à l'instant t₁, un signal d'acquittement, en direction de l'élément émetteur.

Ensuite, selon une deuxième phase, comprise entre l'instant t₁ et un instant t₂, l'élément émetteur détecte le signal d'acquittement ou le changement d'état du signal d'acquittement, et rend invalides les données pour l'élément récepteur, comme cela est représenté par un changement d'état de la courbe 300.

Puis, selon une troisième phase, entre l'instant t₂ et un instant t₃, l'élément récepteur détecte le passage des données dans un état invalide et met le signal d'acquittement dans son état initial ou dans un état dans lequel ce signal était au début de la première phase.

Ensuite, selon une quatrième phase, entre l'instant t₃ et un instant t₄, l'élément émetteur détecte une remise du signal d'acquittement dans son état initial ou dans l'état dans lequel ce signal était lors de la première phase, et est alors à nouveau autorisé à émettre de nouvelles données.

Les signaux de données ou/et de synchronisation transitant dans le réseau peuvent être codés selon un type de codage, insensible aux délais, que l'on appellera « multi-rail » ou « 1 parmi N », et qui est mis en oeuvre pour permettre aux noeuds :
- de détecter la présence de nouvelles données leur parvenant,
- et de distinguer des cas où de nouvelles données leur parvenant en entrée prennent un état identique à celui de données précédentes.

Ce type de codage permet également à un noeud de générer un signal d'acquittement pour informer ses noeuds voisins de la fin d'un traitement.

Par exemple, pour un codage double-rail tel qu'illustré sur la figure 4, un bit de données est codé avec 2 fils, sur lesquels, quatre états sont à priori disponibles. Un premier fil (désigné par un signal référencé 410 sur la figure 4) peut être prévu pour encoder une valeur '0' du bit de données, tandis qu'un deuxième fil (signal référencé 420 sur la figure 4) encode la valeur '1'.

Lorsqu'un état bas est présent sur les deux fils, il n'y a pas de valeur valide (signaux 410 et 420 au niveau logique 0 avant l'instant référencé T₀. Lorsque le premier fil change d'état et passe par exemple à un état haut, ce dernier code la valeur '0', le deuxième fil à l'état haut indique la valeur 1'. Un état haut présent simultanément sur les deux fils est interdit. Chaque changement de valeur valide implique de repasser par l'état invalide dans lequel les deux fils sont à l'état bas.

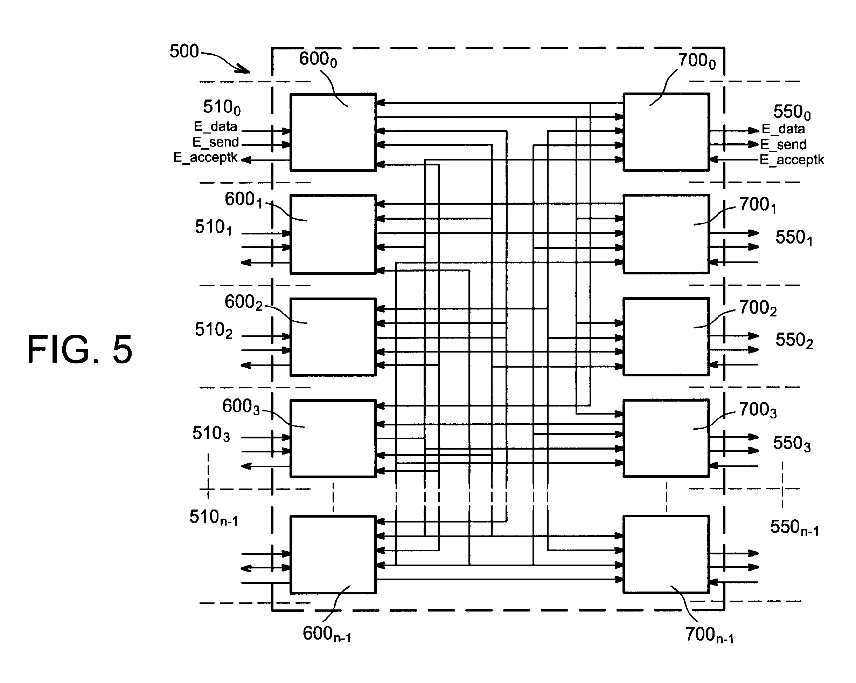

L'architecture d'un noeud asynchrone est illustré en figure 5 : chaque entrée est connectée à (n-1) sorties et chaque sortie est connectée à (n-1) entrées, n est par exemple supérieur ou égal à 4, et donc le noeud peut comporter un nombre d'entrées et de sorties supérieur à 5.

Un exemple d'un tel noeud 500, rattaché à n liens (avec n un entier supérieur à 5) est représenté sur cette figure 5 (les liens n'étant pas représentés sur cette figure). Ce noeud 500 peut avoir une architecture du type de celle d'un « crossbar » n par n, et comporte n entrées 510₀, ..., 510ₙ₋₁ et n sorties 550₀, ..., 550ₙ₋₁, chacune des entrées 510₀,..., 510ₙ₋₁ pouvant être connectée à n-1 sorties. Pour cette variante de réseau, k (avec k un entier supérieur ou égal à 2) canaux de priorité peuvent être implémentés. Ainsi, chacun des paquets de données transitant à travers une telle variante de réseau peut être associé à un canal de priorité choisi parmi k canaux ou niveaux de priorités.

Un tel noeud 500 pourra mettre en oeuvre un arbitrage statique pour déterminer un ordre de transfert entre des paquets appartenant à un même canal, et en particulier au canal de priorité le plus élevé, par exemple un paquet provenant de l'entrée 510₀ associé au canal 0 de priorité le plus élevé, pourra être déterminé comme prioritaire par rapport à un autre paquet associé au même canal 0, et provenant de l'entrée 510₁.

Chacune des entrées 510₀,...,510ₙ₋₁ du noeud 500 est associée à un contrôleur d'entrée respectif 600₀, ..., 600ₙ₋₁, tandis que chaque sortie 510₀, ..., 510ₙ₋₁ est associées respectivement à un contrôleur de sortie 700₀, ..., 700ₙ₋₁.

Selon un exemple de réalisation du noeud illustré sur la figure 5, susceptible de régir k=2 niveaux ou canaux de priorité différents, et susceptible de recevoir des paquets de flits, par exemple de 34 bits, les bus de données du noeud recevant des paquets sous forme de signaux E_data et les bus de données du noeud émettant des paquets sous forme de signaux E_send, peuvent être encodés en base 4 afin de réduire la consommation, afin d'obtenir des vecteurs de 17 multi-rails de base 4 pour 34 bits de données.

Les signaux de contrôle E_send, de type « send » peuvent être mis en oeuvre avec un codage double-rail, pour permettre de transporter deux numéros de canaux virtuel ou de canaux de priorité différents. Les signaux de contrôle S_acceptk de type « accept » peuvent être quant à eux mis en oeuvre avec un codage simple rail pour indiquer si une place est à nouveau disponible dans le noeud suivant.

Une architecture d'un contrôleur d'entrée 600₀ du noeud asynchrone 500, est représentée plus en détail sur la figure 6.

Ce contrôleur 600₀ permet de transférer un flit donné présent sur son entrée 510₀, à destination d'une sortie donnée, ou d'un contrôleur de sortie donné, parmi un ensemble de n-1 sorties ou contrôleurs de sortie 700₁,...,700ₙ₋₁ (voir figures 5 et 7) de ce même noeud asynchrone 500.

Le contrôleur d'entrée 600₀ reçoit donc, de l'entrée 510₀ (non représentée sur la figure 6), à laquelle il est associé, un flit de données d'un paquet sous forme d'un signal E_data, par exemple de 34 bits, auquel est joint un signal de synchronisation du type « send », noté E_send.

On rappelle, comme déjà indiqué ci-dessus, que tant les données E_data que le signal de synchronisation E_send sont envoyés par un noeud ou une ressource reliée à l'entrée 510₀ précédent le noeud asynchrone 500 dans le chemin que suit le paquet de données dans le réseau.

Le contrôleur d'entrée 600₀ génère également des signaux d'acceptation de type « accept » (E_ accept1,..., E_acceptk sur la figure 6) à destination de l'élément (noeud ou ressource) voisin du noeud asynchrone 500 relié à l'entrée 510₀, et dont proviennent les données reçues par ce noeud 500.

Le contrôleur 600₀ comporte un module ou des moyens 610 pour dupliquer au moins une partie d'un flit, entrant sous forme du signal E_data, en plusieurs flits, par exemple en deux signaux E_data_y et E_data_x, destinés, respectivement, à un module ou des moyens 620, dits moyens d'acquisition de nouvelles données, et à un autre module ou des moyens 630, dits moyens d'acquisition de signaux de synchronisation.

Les moyens 630 reçoivent le signal de synchronisation E_send, auquel le flit entrant est associé, et qui comporte, sous forme de code, le niveau ou canal de priorité du paquet auquel ce flit appartient. La provenance de ce signal a déjà été expliquée ci-dessus. Ainsi ces moyens 630 permettent notamment de décoder le niveau ou canal de priorité d'un flit donné d'un paquet entrant dans le noeud 500.

Les moyens 630 permettent également de décoder certains des bits du flit donné, en particulier certains des bits de routage de ce flit d'un champ « chemin vers la cible » comportant par exemple une liste ordonnée de données de directions, par exemple les bits de poids faible du champ « chemin vers la cible.

Suite au décodage, par les moyens 630, des bits du champ « chemin vers la cible », ces moyens 630 génèrent :
- d'une part un signal de validation de sortie Valid R0_to_S0,..., Valid_Rk-1_to_Sn-1, (en abrégé par la suite Valid_R_to_S) pour valider un canal de priorité parmi les k niveaux de priorité et une sortie, parmi les sorties du noeud que le flit entrant est destiné à emprunter en sortie du noeud asynchrone ;
- d'autre part une information de début de paquet BopR1_to_S0, ..., BopRk-1_to_Sn-1, (en abrégé par la suite BopR_to_S) pour l'envoyer à un contrôleur de sortie du noeud asynchrone.

A ce contrôleur de sortie sont également fournies :
- des informations concernant le canal de priorité du flit,
- des informations concernant la position du flit dans un paquet, par exemple si ce flit est-il un flit de début de paquet ou un flit de fin de paquet.

Dans un cas où le flit E_data_x est un flit de début de paquet, les moyens 630 génèrent un signal de commande CTRL_E, pour indiquer aux moyens 620 d'acquisition de données le canal de priorité auquel le paquet entrant est associé, ainsi qu'une commande de décalage des bits du champ « chemin vers la cible ».

Les bits de poids faible du champ « chemin vers la cible » flit entrant, qui indiquent la destination, sont également décodés par les moyens 630. Ces bits de destination des données permettent de générer un signal de validation Valid_R_to_S et une information de début de paquet, excepté pour des paquets associés au niveau ou canal de plus forte priorité qui peuvent être arbitrés différemment. Les deux signaux, relatifs à l'information de validité et à l'information de début de paquet, activent la sortie concernée sur le niveau de priorité courant.

L'information relative à cette sortie est mémorisée dans des registres 640₀,..., 640ₖ₋₁, après avoir été générée par les moyens 630 sous forme d'un signal d'information NXT_Rk de destination. Ce signal NXT_Rk envoyé dans un des registres 640₀,..., 640ₖ₋₁, permet de conserver les données de routage pour la suite du paquet entrant.

Dans un cas où le flit entrant n'est pas un flit de début de paquet, les moyens 630 génèrent un signal de commande CTRL_E, qui indique alors seulement le niveau ou canal de priorité du flit entrant. La destination en cours, mémorisée ainsi qu'on vient de l'expliquer ci-dessus, est lue (signal CUR_Rk envoyé par les moyens 640₀,..., 640ₖ₋₁), afin d'activer la sortie en cours avec le niveau de priorité concernée.

Recevant le signal E_data_y, les moyens 620 effectuent, en fonction de la valeur du signal CTRL_E produit par les moyens 630, un décalage des bits du « chemin vers la cible » du flit d'en-tête d'un paquet donné entrant dans le noeud 500. Ceci permet de préparer l'information de routage du paquet donné, pour un autre noeud, voisin du noeud 500, que le paquet donné est destiné à traverser après le noeud 500. Après décalage, les bits de poids faible du « chemin vers la cible » du flit d'en-tête indiquent au noeud suivant laquelle de ses propres sorties le paquet de données est destiné à emprunter.

Les moyens 620 permettent également, à l'aide du signal de commande CTRL_E, d'orienter les données d'un flit vers un module donné ou des moyens donnés parmi un ensemble de k moyens 625₀,...,625ₖ₋₁, par exemple des canaux de communication, en fonction du canal de priorité auquel ce flit est associé. Par exemple un flit associé au canal de priorité le plus élevé, par exemple le canal 0, est orienté vers des moyens 625₀ prévus pour traiter des flits associés au canal 0. Les moyens 620 permettent ainsi d'effectuer un classement par canal virtuel ou canal de priorité des paquets entrants par l'entrée à laquelle ils sont associés dans le noeud 500.

Les moyens 620 permettent également de décoder, puis dupliquer le bit « eop » de fin de paquet du flit d'en-tête du paquet donné entrant, en vue d'une utilisation par une machine d'état (non représentée sur la figure 6) d'un contrôleur de sortie du noeud.

Les moyens ou registres 625₀, ..., 625ₖ₋₁ permettent de transférer des données issues des moyens 620 vers un des n-1 contrôleurs 700₁, ...,700ₙ₋₁ de sortie du noeud 500. Pour cela, les moyens 625₀, ...,625ₖ₋₁ sont sondés par les n-1 contrôleurs 700₁,..., 700ₙ₋₁ de sortie, selon un mécanisme de sondage du type de celui décrit dans le document de P.Vivet, « Une méthodologie de conception de circuits intégrés quasi insensibles aux délais : application à l'étude et à la réalisation d'un processeur RISC 16 bits asynchrone », Thèse, INPG, 2001. Ce sondage est réalisé par les contrôleurs de sortie 700₁, ..., 700ₙ₋₁, lorsque ces derniers sont activés par des signaux de validation émis par les moyens 630.

Le contrôleur d'entrée 600₀ comprend également des moyens 650₁, ..., 650ₖ pour sonder les signaux d'acceptation sur les différents canaux ou niveaux de priorité provenant de chacune des sorties A1_fromS0,..., Ak-1_fromSn-1 pour générer un signal d'acceptation E_accept1, ...,E_acceptk-1. Ces moyens 650₁, ..., 650ₖ peuvent fonctionner selon un mécanisme de sondage tel que décrit plus haut. De plus, ces moyens 650₁, ...,650ₖ sont prévus pour générer un jeton d'initialisation. Préalablement à un échange de type « send/accept » tel que décrit précédemment. Le contrôleur d'entrée 600₀ indique alors, au démarrage de cet échange, au noeud ou à un élément précédent dans le réseau, qu'un canal virtuel donné parmi les k canaux virtuels est libre.

Des moyens de mémorisation 640₀, ..., 640ₖ₋₁ par exemple sous forme de mémoires tampons (« buffers selon la terminologie anglo-saxonne ») sont également prévus pour conserver les informations de destination d'un paquet en cours de transfert dans le noeud 500, en particulier pour les flits suivant le flit d'en tête du paquet. Ces informations sont envoyées aux moyens de mémorisation 640 par les moyens 630. A l'initialisation du circuit ou du réseau, avant qu'un flit d'en tête d'un nouveau paquet accède au contrôleur d'entrée 600₀, ces moyens de mémorisation 640₀, ..., 640ₖ₋₁ émettent un jeton d'initialisation vers les moyens 630.

De préférence, le signal d'acceptation E_accept1, ...,E_acceptk-1, n'est envoyé que pour acquitter certains types de paquets, et en particulier des paquets associés à des canaux virtuels ou des canaux de priorité ayant un niveau de priorité inférieur au niveau priorité le plus élevé.

Ainsi, un contrôleur d'entrée décode le signal de synchronisation, attend une nouvelle valeur d'entrée des données, l'affecte aux moyens 625₀, ..., 625ₖ₋₁ correspondant au niveau de priorité concerné, et, en fonction de la destination du paquet en cours, valide, au moyen d'un signal Valid_R_to_S, une de ses sorties vers le bon contrôleur de sortie.

Une architecture d'un contrôleur de sortie du noeud 500, par exemple du contrôleur de sortie 700₀, est représentée sur la figure 7.

Ce contrôleur de sortie 700₀ oriente vers la sortie 550₀ (non représentée sur la figure 7) à laquelle il est associé, un flit de données d'un paquet sous forme d'un signal S_data, par exemple de 34 bits, auquel est joint un signal de synchronisation du type « send », noté S_send.

Le contrôleur de sortie permet en outre de réaliser un arbitrage de transfert en sortie 700₀ entre les paquets prioritaires et les paquets moins prioritaires. Il permet également de réaliser un arbitrage entre des paquets de données de même niveau de priorité.

Pour déterminer un ordre de transfert entre des paquets de priorités différentes, le contrôleur de sortie 700₀ prend en compte les canaux virtuels ou canaux de priorité auxquels ces paquets sont respectivement associés.

Pour arbitrer un ordre de transfert entre des paquets de priorité identique, le contrôleur de sortie 700₀ peut, dans un cas où ces paquets sont associés au canal de priorité le plus élevé, réaliser un arbitrage en fonction des entrées, parmi les entrées 500₀, ..., 500ₙ₋₁, dont ces paquets proviennent respectivement.

Dans un cas où les paquets, dont l'ordre de transfert est à déterminer, sont associés à un même canal, par exemple le canal 1, de priorité inférieure à celle du canal de priorité le plus élevé, par exemple le canal 0, le contrôleur est susceptible d'effectuer un arbitrage de type FIFO (FIFO pour « first in first out » pour « premier arrivé, premier servi »).

Le contrôleur de sortie 700₀ permet donc de réaliser un arbitrage entre les ordres de transfert de plusieurs paquets de données accédant au noeud 500 par l'une des entrées 500₀, ..., 500ₙ₋₁ et en particulier entre plusieurs paquets destinés à accéder à la sortie 550₀ auquel ce contrôleur 700₀ est associé.

Le contrôleur de sortie 700₀ comporte des moyens de classement, par exemple k-1 moyens de mémorisation ou des registres 710₁,..., 710ₖ₋₁ (avec k un nombre entier supérieur ou égal à 2, correspondant au nombre de canaux de priorité), permettant de ranger des requêtes «BoP» de début de paquet ou des parties « BoP » de paquets indiquant un nouveau paquet, dans l'ordre d'arrivée de ces requêtes, selon un classement du type premier arrivé, premier servi.

Aux k-1 moyens de classement 710₁, ...,710ₖ₋₁ sont associés respectivement des moyens de stockage 720₁, ..., 720ₖ₋₁ formés chacun de n-1 mémoires tampons, permettant à chacune de stocker n-1 requêtes de début de paquet. Chacun des moyens de classement 710₁, ..., 710ₖ₋₁ comporte n entrées et est dédié au classement de paquets associés à un même canal virtuel. Les moyens 710₁, ..., 710ₖ₋₁ peuvent être par défaut en veille ou au repos et pour s'initialiser ou se réveiller dès lors qu'une activité est détectée sur un des canaux de priorité.

Cette détection peut être faite à l'aide d'une fonction de sondage telle que décrite dans le document de P.Vivet, « méthodologie de conception de circuits intégrés quasi insensibles aux délais : application à l'étude et la réalisation d'un processeur RISC 16 bits asynchrone », Thèse, Institut National Polytechnique de Grenoble, 2001.

De préférence, pour permettre au noeud 500 d'effectuer rapidement le transfert de paquets associés au canal de priorité le plus élevé, par exemple le canal 0, ces moyens 710₁,...,710ₖ₋₁, classent uniquement des paquets associés à un canal de priorité inférieur au canal de priorité le plus élevé. Lorsqu'une activité est détectée (détection d'un bit BoP) sur un des canaux:
- si le bit BoP vient de l'entrée 510₀, alors on stocke la requête de l'entrée 510₀ dans une mémoire appartenant aux moyens 720₁, ..., 720ₖ₋₁, en fonction du canal de priorité du paquet auquel appartient ce BoP.
- sinon si le bit BoP vient de l'entrée 510₁, alors on stocke la requête de l'entrée 510₁ dans une autre mémoire appartenant aux moyens 720₁, ...,720ₖ₋₁, en fonction du canal de priorité du paquet auquel appartient ce BoP.

Des moyens 730 et des moyens 740 par exemple sous forme de machines d'états permettent d'arbitrer les requêtes de validité en fonction de la priorité courante.

Plusieurs cas vont être décrits pour expliquer ce processus d'arbitrage.

Auparavant, les différents signaux représentés sur la figure 7, vont être décrits ou mis en correspondance avec les signaux mentionnés en figure 6.

Les signaux valid_R0_from_E0, ..., valid_Rk-1_from_En-1 et bop_R1_from_E0, ..., bopRk-1_from_En-1 sont respectivement les signaux de validité valid_R_to_S et de début de paquet bop_R_to_S émis par les moyens 630 de la figure 6. Les signaux Rk_eop_fromE0 correspondent aux signaux de validité valid_Rk_to_S1 et Rk_eop_to_S1 émis par les moyens 625 de la figure 6. Les signaux Ak_to_E1 correspondent aux signaux de validité Ak_from_S1 reçus par les moyens 650 de la figure 6. Les signaux Rk_fromEl correspondent aux signaux Rk_to_S1 émis par les moyens 625 de la figure 6. Les signaux S_ACCEPT1, ..., S_ACCEPTk-1 sont des signaux d'acceptation reçus d'un élément (un noeud ou une ressource) du réseau, qui suit le noeud asynchrone 500 dans le trajet des données dans le réseau.

En ce qui concerne le procédé d'arbitrage mis en oeuvre par la machine d'état 730, on peut distinguer trois cas.

Premier cas : si la priorité en cours de traitement est « état vide », et qu'il n'y plus de paquet en cours vers ce contrôleur de sortie, alors :
- si un paquet associé au canal de plus forte priorité, par exemple un paquet associé au canal 0 est présent, l'état courant devient prioritaire, les moyens 730 génèrent le signal NXT_PRIO et la provenance du paquet est conservée à l'aide d'une information NXT_FROM. Le signal de validité est acquitté.
- Si aucun paquet de canal de plus forte priorité n'est présent, un paquet de niveau ou de canal de priorité inférieur au canal de priorité le plus élevé a réveillé le processus. L'entrée à transférer est lue dans une des listes correspondantes. L'état courant devient non prioritaire, le signal NXT_PRIO est envoyé vers la machine d'état 740, tandis que la provenance du paquet est conservée dans la machine d'état 740 à l'aide de l'information NXT_FROM. Le signal d'acceptation de niveau correspondant est acquitté.

Deuxième cas : la priorité en cours est : état non prioritaire (paquet de niveau k).

Dans ce cas, un paquet non prioritaire peut être coupé par un paquet de plus forte priorité.

Une « garde » ou des moyens de sélection testent alors :
- la présence d'un signal de validité du niveau de plus forte priorité,
- ou la présence d'un signal de validité d'un niveau plus prioritaire, si un signal d'acceptation du niveau de priorité correspondant provenant du noeud suivant dans le réseau a été reçu,
- ou la présence du signal de validité du paquet non prioritaire en cours, si un signal d'acceptation du niveau non prioritaire en cours, provenant du noeud suivant dans le réseau, a été reçu.

Si un paquet plus prioritaire est présent, les moyens 730 suspendent le paquet non prioritaire en cours en générant le signal TO_SUSPEND vers les moyens 740, et le paquet de canal de plus forte priorité est traité.

Si aucun paquet associé au canal de plus forte priorité n'est présent mais que la suite d'un paquet associé à un canal de priorité inférieur au canal de plus forte priorité est présente, la suite du paquet est traitée.

Troisième cas : la priorité en cours est un état de plus forte priorité. Dans ce cas, le paquet en cours ne peut pas être coupé, et la suite du paquet à transférer est attendue.

Un jeton d'initialisation d'état vide est généré par la machine d'état 740.

En ce qui concerne le procédé d'arbitrage mis en oeuvre par la machine d'état 740, on peut également distinguer 3 cas :
premier cas : l'état en cours est : état vide et il n'y plus de paquet en cours vers cette sortie. Le bit d'EoP indiquant la fin d'un paquet concerné est décodé puis l'état courant de la sortie est mis à jour. Un signal de contrôle CTRL_SWITCH de moyens commutateurs 770 est activé.

Pour un paquet non prioritaire, des signaux d'acceptation Ak_toEn du niveau correspondant vers l'étage d'entrée sont générés.

Deuxième cas : l'état en cours est un état non prioritaire (paquet de niveau ou canal entre 1 et k).

Si un nouveau paquet plus prioritaire est présent, le paquet en cours de niveau moins prioritaire est suspendu. Le processus gère donc la suspension afin d'autoriser le transfert du nouveau paquet. Dans le cas où EoP=1, alors le paquet est de longueur 1 et il n'est pas nécessaire de suspendre.

Sinon, la suite du paquet en cours est transférée.

Troisième cas : l'état en cours est un état de plus forte priorité (paquet de niveau ou canal 0).

La suite du paquet de niveau de plus forte priorité est alors attendue.

Alors, si les moyens d'arbitrage 730 détectent une activité sur l'un des signaux de validité du niveau le plus prioritaire ou sur les signaux de validité des niveaux moins prioritaires et si un signal d'acceptation du niveau de priorité correspondant provenant du noeud suivant dans le réseau a été reçu, le procédé d'arbitrage teste d'abord la présence d'un paquet de niveau le plus prioritaire avec une priorité fixe.

Les moyens 740 assurent la gestion des priorités et de l'état courant. Ces moyens reçoivent donc les bits d'EoP qui permettent de prendre la décision de passage d'un état à l'autre et d'une priorité à l'autre. Ces moyens permettent également de restaurer les paquets de niveau moins prioritaires suspendus. Ils génèrent également un signal de contrôle CTRL_SWITCH d'un commutateur 770 de sortie.

En fin de paquet, le processus teste la sortie de moyens 750 de suspension pour savoir si un paquet de niveau moins prioritaire avait été suspendu (CUR_SUSPENDED).

Les moyens 750 sont aptes à conserver des variables d'état de la machine d'état 740, tandis que des moyens 760 sont quant à eux aptes à conserver des variables de suspension de cette machine d'état 740. Ces moyens génèrent des jetons d'initialisation à 'état vide' et 'pas de suspension'.

Les moyens 770 sont des moyens de commutation, par exemple un multiplexeur de k(n-1) entrées possibles (n-1 entrées avec k niveaux de priorité) vers la sortie S_data du noeud. S_send est généré par ces même moyens.

Un circuit selon l'invention peut être modélisé en langage CHP, dérivé du CSP, qui permet de décrire les noeuds asynchrones par processus communiquant. On pourra pour ce faire se référer à l'article de A.J.Martin intitulé « synthesis of asynchronous VLSI circuits », Caltech-CS-TR-93-28.

La synthèse du circuit peut ensuite être réalisée en partie par les outils de synthèse de circuits asynchrones tels que TAST (voir l'article de A.V.Dinh Duc et al. intitulé « TAST CAD tools : tutorial », Intern. Symposium on Advanced research in Asynchronous Circuits and Systems ASYNC'02, Manchester, UK, April 8 - 11, 2002 ; également : A.V.Dinh Duc et al. « synthesis of QDI asynchronous circuits from DTL - stylePetri net», IWLS - 02, 11th IEEE/ACM Int. Worshop on Logic and Synthesis, New Orleans, Louisiana, Junme 4 - 7, 2002), ou encore par des méthodes de synthèse décrites dans JB Rigaud et al. « Modeling and Design of Asynchronous Priority Arbitrers for On-Chip Communication Systems » in Com. Systems SOC Design Methodologies, edited by M.Roberts et al., Kluwer Academic Publishers, July 2002, ISBN 1-4020-7148-5 ou dans JB Rigaud "specification de sbibliothèques pour la synthèse de circuits asynchrones », thèse, INPG, 2002, en particulier pour les blocs d'arbitrage.

Une structure de réseau asynchrone selon l'invention permet de mettre en oeuvre différents types de services, tel que par exemple un service dit « de latence garantie » et un autre service communément appelé « de best effort » ou meilleur effort. L'implémentation de ces différents services ainsi que la gestion des priorités entre des paquets de données transitant dans une telle structure est au moins en partie assurée à l'aide de canaux de priorité dits « canaux virtuels » auxquels les paquets de données sont associés.

## Revendications

1. Procédé de transmission de données dans un réseau sur puce à protocole de communication asynchrone, ce réseau comportant un ou plusieurs noeuds (120, 500) et une ou plusieurs ressources (114), chaque noeud étant doté d'une ou plusieurs entrées (510₀, ..., 510ₙ₋₁) associées à un ou plusieurs contrôleurs d'entrée (600₀,..., 600ₙ₋₁), et d'une ou plusieurs sorties (550₀,..., 550ₙ₋₁) associées à un ou plusieurs contrôleurs de sortie (700₀,..., 700ₙ₋₁), **caractérisé en ce que** au moins un des noeuds fonctionne sans horloge interne et est apte à déterminer une hiérarchie de transfert entre deux paquets de données à acheminer vers une même sortie, cette hiérarchie étant déterminée au moins en fonction d'une information de canal de priorité associée à chaque paquet de données, cette information de canal de priorité et ce paquet de données provenant d'un autre noeud ou d'une ressource du réseau, l'information de canal de priorité étant transmise par un signal de synchronisation d'un premier type suivant le protocole de communication asynchrone.

2. Procédé selon la revendication 1, la hiérarchie de transfert étant déterminée, lorsque les canaux de priorité sont identiques, par affectation, à chaque paquet, d'un niveau de priorité fonction de son instant d'arrivée dans le noeud (500) et/ou de l'entrée (510₀) d'arrivée ou du port d'entrée d'arrivée dans le noeud.

3. Procédé selon la revendication 1 ou 2, dans lequel, lorsqu'un premier paquet est en cours de sortie du noeud, mais présente un niveau de priorité inférieur au niveau de priorité d'un deuxième paquet, dit paquet « entrant », la sortie du premier paquet est interrompue ou stoppée, et le deuxième paquet est transféré en sortie prioritairement.

4. Procédé selon l'une des revendications 1 à 3, dans lequel des informations de routage sont associées à chaque paquet de données, une partie de ces informations de routage étant destinée à chaque noeud traversé.

5. Procédé selon la revendication 4, une information de routage relative à un noeud (500) est lue et utilisée dans ce noeud, les autres informations de routage, destinés aux noeuds non encore traversés, étant préparées pour la destination suivante du paquet de données dans le réseau.

6. Procédé selon la revendication 4 ou 5, les informations de routage étant situées en début de paquet de données.

7. Procédé selon l'une des revendications 4 à 6, les informations de routage étant en outre mémorisées dans le contrôleur d'entrée (600₀) du noeud (500) traversé en vue du transfert des données du contrôleur d'entrée vers le contrôleur de sortie (7oxo) .

8. Procédé selon l'une des revendications 4 à 7, le noeud (500) ayant des moyens de mémorisation d'une information de routage du premier paquet dont la sortie est interrompue ou stoppée.

9. Procédé selon l'une des revendications 1 à 8, comportant en outre l'envoi, par le noeud (500) qui reçoit une donnée ou plusieurs données, vers l'élément dont il a reçu cette donnée ou ces données, d'un signal de synchronisation d'un deuxième type ou signal d'acceptation après réception et acceptation des données et du signal de synchronisation du premier type.

10. Procédé selon la revendication 9, dans lequel le noeud n'envoie pas de signal d'acceptation ou de signal de synchronisation du deuxième type pour des données auxquelles est associé le canal de plus forte priorité.

11. Procédé selon la revendication 9 ou 10, dans lequel les signaux de synchronisation du protocole de communication est implémenté au moyen d'un protocole à quatre phases, ou/et d'un codage multi-rails.

12. Procédé selon l'une des revendications 1 à 11, le contrôleur d'entrée (600₀) envoyant, lorsqu'il reçoit un début de paquet de données à transmettre, un signal, dit de validité, au contrôleur de sortie de la sortie vers laquelle les données doivent être transmises, ce signal de validité comportant des données relatives au canal de priorité desdites données à transmettre.

13. Procédé selon la revendication 12, le contrôleur de sortie (700₀), après réception du signal de validité, incorporant des requêtes de début de paquet, appartenant à des paquets ne faisant pas partie des paquets données les plus prioritaires dans des files d'attente de requêtes de début de paquets, appartenant respectivement à des paquets de données de même canal de priorité.

14. Procédé selon l'une des revendications 12 ou 13, le contrôleur de sortie (700₀), après réception du signal de validité, surveillant des registres du contrôleur d'entrée dans lesquels sont stockés les données en fonction de leur canal de priorité.

15. Procédé selon l'une des revendications précédentes, le contrôleur d'entrée (600₀) mémorisant les données de canal de priorité en vue du transfert des données vers le contrôleur de sortie.

16. Dispositif de transmission de donnés comportant un réseau sur puce à protocole de communication asynchrone, ce réseau comportant un ou plusieurs noeuds (120, 500) et une ou plusieurs ressources (114), chaque noeud étant doté d'une ou plusieurs entrées (510₀,...,510ₙ₋₁) associées à un ou plusieurs contrôleurs d'entrée (600₀,..., 600ₙ₋₁), et d'une ou plusieurs sorties (550₀, ..., 550ₙ₋₁) associées à un ou plusieurs contrôleurs de sortie (700₀, ..., 700ₙ₋₁), **caractérisé en ce que** au moins un des noeuds fonctionne sans horloge interne, chacun des contrôleurs d'entrée de ce noeud comportant :
- des moyens pour déterminer une hiérarchie de transfert entre deux paquets de données à acheminer vers une même sortie, cette hiérarchie étant déterminée au moins en fonction d'une information de canal de priorité associée à chaque paquet de données,
- des moyens (630) pour recevoir un signal de synchronisation, comportant une information de canal de priorité, et des paquets de données d'un autre noeud ou d'une ressource du réseau.

17. Dispositif selon la revendication 16, les moyens pour déterminer la hiérarchie de transfert comportant des moyens pour affecter à chaque paquet de données, lorsque les canaux de priorité sont identiques, un niveau de priorité fonction de son instant d'arrivée dans le noeud (500) et/ou de l'entrée (510ₒ) ou du port d'entrée dans le noeud.

18. Dispositif selon l'une des revendications 16 ou 17, comportant en outre des moyens pour interrompre ou suspendre la sortie d'un premier paquet lorsque ce premier paquet est en cours de sortie du noeud, mais présente un niveau de priorité inférieur au niveau de priorité d'un deuxième paquet, dit paquet entrant, et pour sortir le deuxième paquet prioritairement.

19. Dispositif selon l'une des revendications 16 à 18, comportant en outre des moyens pour décoder des informations de routage associées à chaque paquet de données, une partie de ces informations de routage étant destinée à chaque noeud traversé.

20. Dispositif selon la revendication 19, comportant des moyens pour lire l'information de routage relative à un noeud, et des moyens pour préparer pour la destination suivante du paquet de données dans le réseau, les informations de routage.

21. Dispositif selon l'une des revendications 19 ou 20, comportant en outre des moyens pour mémoriser (640) des informations de routage dans le contrôleur d'entrée d'un noeud traversé, en vue du transfert des données du contrôleur d'entrée vers le contrôleur de sortie.

22. Dispositif selon l'une des revendications 19 à 21, le noeud (500) asynchrone ayant des moyens de mémorisation d'une information de routage du premier paquet dont la sortie est interrompue ou stoppée.

23. Dispositif selon l'une des revendications 16 à 22, le noeud (500) asynchrone comportant en outre des moyens pour envoyer, lorsqu'il reçoit une donnée ou plusieurs données, vers l'élément dont il a reçu cette données ou ces données, un signal d'acceptation (E_accept) après réception et acceptation des données et du signal de synchronisation correspondant.

24. Dispositif selon l'une des revendications 16 à 23, le contrôleur d'entrée comportant des moyens (630) pour envoyer, lorsqu'il reçoit un début de paquet de données à transmettre, un signal, dit de validité, au contrôleur de sortie de la sortie vers laquelle les données doivent être transmises, ce signal de validité comportant des données relatives au canal de priorité desdites données à transmettre.

25. Dispositif selon la revendication 24, le contrôleur de sortie (700₀) comportant des moyens pour, après réception du signal de validité, incorporer une requête de début de paquet appartenant à un paquet ne faisant pas partie des paquets de données de canal le plus prioritaire, dans une file d'attente de requêtes de début de paquet, appartenant respectivement à des paquets de données de même canal de priorité.

26. Dispositif selon l'une des revendications 24 ou 25, le contrôleur de sortie (700₀) comportant des moyens (740) pour, après réception d'un signal de validité, surveiller des registres du contrôleur d'entrée dans lesquels sont stockés des données en fonction de leur canal de priorité.

27. Dispositif selon l'une des revendications 16 à 26, le contrôleur d'entrée (600₀) comportant des moyens pour mémoriser des données de canal de priorité en vue du transfert des données vers le contrôleur de sortie.

## Claims

1. Data transmission method in a network on chip with an asynchronous communication protocol, this network comprising one or several nodes (120, 500) and one or several resources (114), each node being provided with one or several inputs (510₀....510ₙ₋₁) associated with or several input controllers (600₀.....600ₙ₋₁), and one or several outputs (550₀.....550ₙ₋₁) associated with one or several output controllers (700₀.....700ₙ₋₁), at least one of the nodes operating without an internal clock determining a transfer hierarchy between two data packets to be routed to the same output, this hierarchy being determined at least as a function of priority channel information associated with each data packet, this priority channel information and this data packet originating from another node or from a network resource, the priority channel information being transmitted by a first type of a synchronization signal according to the asynchronous communication protocol.

2. Method according to claim 1, the transfer hierarchy when priority channels are identical being determined by assigning a priority level to each packet, depending on its time of arrival in the node (500) and/or the input (510o) of arrival or the input port of arrival into the node.

3. Method according to claim 1, in which, when a first packet is being output from the node but has a lower priority level than a second packet called the "incoming" packet, the output from the first packet is interrupted or stopped and the second packet is output in priority.

4. Method according to one of the claims 1 to 3, in which routing information is associated with each data packet, some of this routing information being addressed to each node passed through.

5. Method according to claim 4, routing information for a node (500) is read and used in this node, the other routing information addressed to nodes not yet passed through being prepared for the next destination of the data packet in the network.

6. Method according to claim 4 or 5, routing information being located at the beginning of the data packet.

7. Method according to one of the claims 4 to 6, routing information being also memorized in the input controller (600o) of the node (500) passed through so that data can be transferred from the input controller to the output controller (700o).

8. Method according to one of the claims 4 to 7, the node (500) using means for memorizing routing information for the first packet for which the output is interrupted or stopped.

9. Method according to one of the claims 1 to 8, a second type of synchronization signal or acceptance signal also being sent by the node (500) that receives one or several items of data to the element from which it received this or these data, after reception and acceptance of the data and the synchronization signal of the first type.

10. Method according to claim 9, in which the node does not send an acceptance signal or the synchronization signal of the second type for data with which the highest priority channel is associated.

11. Method according to claim 9 or 10, in which the synchronization signals of the communication protocol are implemented using a four-phase protocol, and/or multi-rail encoding.

12. Method according to one of the claims 1 to 11, when the input controller (600o) receives a beginning of a data packet to be transmitted, said input controller sends a signal called the validity signal to the output controller for the output to which the data must be transmitted, this validity signal containing data related to the priority channel of said data to be transmitted.

13. Method according to claim 12, after receiving the validity signal, the output controller (700o) then builds in begin of packet requests belonging to packets not being part of the highest priority data packets in queues of begin of packet requests, belonging to data packets with the same priority channel.

14. Method according to claim 12 or 13, the output controller (700o) monitors registers of the input controller in which data are stored as a function of their priority channel, after reception of the validity signal.

15. Method according to one of the preceding claims, the input controller (600o) memorizing priority channel data in order to transfer data to the output controller.

16. Data transmission device comprising a network on chip with an asynchronous communication protocol, this network comprising one or several nodes (120, 500) and one or several resources (114), each node being provided with one or several inputs (510o.....510n-1) associated with one or several input controllers (600ₒ.....600ₙ₋₁), and one or several outputs (500ₒ...500ₙ₋₁) associated with one or several output controllers (700ₒ....700ₙ₋₁), at least one of the nodes operating without an internal clock, each input controller of this node comprising:
- means for determining a transfer hierarchy between at least two data packets to be routed to the same output, this hierarchy being determined at least as a function of a priority channel information associated with each data packet,
- means (630) for receiving a synchronization signal comprising a priority channel information, and data packets from another node or network resource.

17. Device according to claim 16, the means for determining the transfer hierarchy comprising means for assigning a priority level to each data packet when priority channels are identical, depending on its time of arrival in the node (500) and/or the input (510ₒ) or the input port into the node.

18. Device according to one of the claims 16 or 17, also comprising means to interrupt or suspend the output from a first packet when this first packet is being output from the node, but has a lower priority level than the priority level than a second packet called the incoming packet, so as to output the second packet in priority.

19. Device according to one of the claims 16 to 18, also comprising means for decoding routing information associated with each data packet, some of this routing information being addressed to each node passed through.

20. Device according to claim 19, comprising means for reading the routing information related to a node, and means for preparing routing information for the next destination of the data packet in the network.

21. Device according to claim 19 or 20, also comprising means for memorizing (640) routing information in the input controller of a node passed through, in order to transfer data from the input controller to the output controller.

22. Device according to one of the claims 19 to 21, the asynchronous node (500) having means for memorizing routing information for the first packet for which the output is interrupted or stopped.

23. Device according to one of the claims 16 to 22, the asynchronous node (500) also comprising means for sending an acceptance signal to the element from which it received one or more data items when said asynchronous node receives these data, the acceptance signal being sent after reception of data and acceptance, of both data and the corresponding synchronization signal.

24. Device according to one of the claims 16 to 23, the input controller comprising means (630) for sending a so-called validity signal to the output controller of the output to which the data are to be transmitted when it receives a begin of packet for data to be transmitted, this validity signal containing data related to the priority channel of said data to be transmitted.

25. Device according to claim 24, the output controller (700o) comprising means for incorporating a begin of packet request for a packet that does not form part of the data packets with the highest priority channel, in a queue of begin of packet requests belonging to data packets with the same priority channel, after receiving a validity signal.

26. Device according to claim 24 or 25, the output controller (700o) comprising means (740) for monitoring registers of the input controller in which data are stored as a function of their priority channel, after reception of a validity signal.

27. Device according to one of the claims 16 to 26, the input controller (600ₒ) comprising means for memorizing priority channel data so as to transfer data towards the output controller.

## Patentansprüche

1. Verfahren zur Datenübertragung in einem On-Chip-Netzwerk mit Asynchronkommunikationsprotokoll, wobei dieses Netzwerk einen oder mehrere Knoten (120, 500) und eine oder mehrere Ressourcen (114) umfasst und jeder Knoten dabei einen oder mehrere Eingänge (510₀,..., 510ₙ₋₁), verbunden mit einem oder mehreren Eingangscontrollern (600₀, ..., 600ₙ₋₁), und einen oder mehrere Ausgänge (550₀, ..., 550ₙ₋₁), verbunden mit einem oder mehreren Ausgangscontrollern (700₀, ..., 700ₙ₋₁), umfasst,
**dadurch gekennzeichnet, dass** wenigstens einer der Knoten ohne internen Takt arbeitet und fähig ist, zwischen zwei für einen selben Ausgang bestimmten Datenpaketen eine TransferHierarchie festzulegen, wobei diese Hierarchie wenigstens in Abhängigkeit von einer jedem Datenpaket zugeordneten Prioritätskanalinformation festgelegt wird und dieser Prioritätskanal und dieses Datenpaket von einem anderen Knoten und einer anderen Ressource des Netzwerks stammen, und die Prioritätskanalinformation übertragen wird durch ein Synchronisationssignal eines ersten Typs gemäß dem Asynchronkommunikationsprotokoll.

2. Verfahren nach Anspruch 1, wobei die Transferhierarchie, wenn die Prioritätskanäle identisch sind, festgelegt wird, indem man jedem Paket einen Prioritätspegel zuordnet, abhängig von dem Zeitpunkt seiner Ankunft in dem Knoten (500) und/oder dem Ankunftseingang (510₀) oder dem Eingangsport in den Knoten.

3. Verfahren nach Anspruch 1 oder 2, in dem - wenn ein erstes Paket gerade dabei ist, den Knoten zu verlassen, aber einen Prioritätspegel aufweist, der niedriger ist als der Prioritätspegel eines "Eingangspaket" genannten zweiten Pakets -, die Ausgabe des ersten Pakets unterbrochen oder gestoppt wird und das zweite Paket prioritär zum Ausgang transferiert wird.

4. Verfahren nach einem der Ansprüche 1 bis 3, in dem Routinginformationen mit jedem Datenpaket verknüpft werden, wobei für jeden der durchquerten Knoten ein Teil dieser Routinginformationen bestimmt ist.

5. Verfahren nach Anspruch 4, wobei eine einen Knoten (500) betreffende Routinginformation in diesem Knoten gelesen und benutzt wird und die für noch nicht durchquerte Knoten bestimmten anderen Routinginformationen vorbereitet werden für die nächste Destination des Datenpakets in dem Netzwerk.

6. Verfahren nach Anspruch 4 oder 5, wobei die Routinginformationen sich am Anfang des Datenpakets befinden.

7. Verfahren nach einem der Ansprüche 4 bis 6, wobei die Routinginformationen außerdem in dem hinsichtlich des Transfers der Daten von dem Eingangscontroller (600₀) zum Ausgangscontroller (700₀) des Knotens (500) in dem Eingangscontroller (600₀) gespeichert werden.

8. Verfahren nach einem der Ansprüche 4 bis 7, wobei der Knoten (500) Einrichtungen zur Speicherung einer Routinginformation des ersten Pakets hat, dessen Ausgabe unterbrochen oder gestoppt wird.

9. Verfahren nach einem der Ansprüche 4 bis 7, das außerdem, nach Empfang und Akzeptation der Daten und des Synchronisationssignals des ersten Typs, die Sendung eines Synchronisationssignals eines zweiten Typs, oder Akzeptationssignals, von dem Knoten (500), der ein Datenelement oder mehrere Datenelemente empfängt, zu der Einrichtung, von der der Knoten dieses Datenelement oder diese Datenelemente erhalten hat, umfasst.

10. Verfahren nach Anspruch 9, in dem der Knoten für Daten, die mit dem Kanal der höchsten Priorität verknüpft sind, kein Akzeptationssignal oder Synchronisationssignal des zweiten Typs sendet.

11. Verfahren nach Anspruch 9 oder 10, in dem die Synchronisationssignale des Kommunikationsprotokolls mittels eines Vierphasenprotokolls und/oder einer Multischienencodierung implementiert sind.

12. Verfahren nach einem der Ansprüche 1 bis 11, wobei der Eingangscontroller (600₀), wenn er einen Datenpaketanfang empfängt, dem Ausgangscontroller des Ausgangs, zu dem die Daten übertragen werden müssen, ein sogenanntes Validitätssignal sendet, wobei dieses Validitätssignal Daten bezüglich des Prioritätssignals der genannten zu übertragenden Daten enthält.

13. Verfahren nach Anspruch 12, wobei der Ausgangscontroller (700₀) nach dem Empfang des Validitätssignals Paketanfangs- bzw. Paketstartanfragen, die zu Paketen gehören, die nicht Teil der prioritärsten Datenpakete sind, in Warteschlangen von Paketstartanfragen einfügt, die jeweils zu Datenpaketen desselben Prioritätskanals gehören.

14. Verfahren nach einem der Ansprüche 12 oder 13, wobei der Ausgangscontroller (700₀), nach dem Empfang des Validitätssignals, Register des Eingangscontrollers überwacht, in denen die Daten in Abhängigkeit von ihrem Prioritätskanal gespeichert werden.

15. Verfahren nach einem der vorangehenden Ansprüche, wobei der Eingangscontroller (600₀) die Daten des Prioritätskanals hinsichtlich des Transfers der Daten zum Ausgangscontroller speichert.

16. Datenübertragungsvorrichtung mit einem On-Chip-Netzwerk mit Asynchronkommunikationsprotokoll, wobei dieses Netzwerk einen oder mehrere Knoten (120, 500) und eine oder mehrere Ressourcen (114) umfasst und jeder Knoten dabei einen oder mehrere Eingänge (510₀,..., 510ₙ₋₁), verbunden mit einem oder mehreren Eingangscontrollern (600₀, ..., 600ₙ₋₁), und einen oder mehrere Ausgänge (550₀, ..., 550ₙ₋₁), verbunden mit einem oder mehreren Ausgangscontrollern (700₀, ..., 700ₙ₋₁), umfasst,
**dadurch gekennzeichnet, dass** wenigstens einer der Knoten ohne internen Takt arbeitet, wobei jeder der Eingangscontroller dieses Knotens umfasst:
- Einrichtungen zur Bestimmung einer Transferhierarchie zwischen zwei zu einem selben Ausgang zu leitenden Datenpaketen, wobei diese Hierarchie wenigstens in Abhängigkeit von einer Information des mit diesem Datenpaket verknüpften Prioritätskanals bestimmt wird,
- Einrichtungen (630) für den Empfang von einem eine Prioritätskanalinformation enthaltenden Synchronisationssignal und von Datenpaketen eines anderen Knotens oder von einer Ressource des Netzwerks.

17. Vorrichtung nach Anspruch 16, wobei die Einrichtungen zur Bestimmung der Transferhierarchie Einrichtungen umfassen, um jedem Datenpaket, wenn die Prioritätskanäle identisch sind, einen Prioritätspegel zuzuordnen, in Abhängigkeit von seinem Ankunftszeitpunkt in dem Knoten (500) und/oder dem Eingang (510ₒ) oder dem Eingangsport in den Knoten.

18. Vorrichtung nach einem der Ansprüche 16 oder 17 mit außerdem Einrichtungen, um die Aussendung eines ersten Datenpakets zu unterbrechen oder auszusetzen, wenn dieses erste Paket
einen Prioritätspegel aufweist, der niedriger ist als der Prioritätspegel eines "Eingangspaket" genannten zweiten Pakets, um dieses zweite Paket prioritär auszugeben.

19. Vorrichtung nach einem der Ansprüche 16 bis 18 mit außerdem Einrichtungen zur Codierung von mit jedem Datenpaket verknüpften Routinginformationen, wobei für jeden durchquerten Knoten ein Teil dieser Informationen bestimmt ist.

20. Verfahren nach Anspruch 19 mit Einrichtungen zum Lesen der einen Knoten betreffenden Routinginformation und Einrichtungen, um die Routinginformationen für die nächste Destination des Datenpakets in dem Netzwerk vorzubereiten.

21. Verfahren nach einem der Ansprüche 19 oder 20 mit außerdem Einrichtungen (640) zur Speicherung der Routinginformationen in dem Eingangscontroller eines durchquerten Knotens hinsichtlich des Transfers der Daten von dem Eingangscontroller zum Ausgangscontroller.

22. Verfahren nach einem der Ansprüche 19 bis 21, wobei der asynchrone Knoten (500) Einrichtungen zur Speicherung einer Routinginformation des ersten Pakets hat, dessen Ausgabe unterbrochen oder gestoppt wird.

23. Verfahren nach einem der Ansprüche 19 bis 22, wobei der asynchrone Knoten (500) außerdem Einrichtungen umfasst, um, wenn er ein Datenelement oder mehrere Datenelemente empfängt, nach Empfang und Akzeptation der Daten und des entsprechenden Synchronisationssignals der Einrichtung, von der er dieses Datenelement oder diese Datenelemente erhalten hat, ein Akzeptationssignal (E_accept) zu senden.

24. Verfahren nach einem der Ansprüche 16 bis 23, wobei der Eingangscontroller Einrichtungen (630) umfasst, um, wenn er einen Datenpaketanfang empfängt, dem Ausgangscontroller des Ausgangs, zu dem die Daten übertragen werden sollen, ein sogenanntes Validitätssignal zu senden, wobei dieses Validitätssignal Daten bezüglich des Prioritätskanals der genannten zu übertragenden Daten enthält.

25. Vorrichtung nach Anspruch 24, wobei der Ausgangscontroller (700₀) Einrichtungen umfasst, um nach Empfang des Validitätssignals eine Paketanfangs- bzw. Paketstartanfrage, die zu einem Paket gehört, das nicht Teil der Datenpakete des prioritärsten Kanals ist, in eine Warteschlange für Paketstartanfragen einzufügen, die jeweils zu Datenpaketen desselben Prioritätskanals gehören.

26. Verfahren nach einem der Ansprüche 24 oder 25, wobei der Ausgangscontroller (700₀) Einrichtungen (740) umfasst, um nach Empfang eines Validitätssignals Register des Eingangcontrollers zu überwachen, in denen Daten in Abhängigkeit von ihrem Prioritätskanal gespeichert werden.

27. Verfahren nach einem der Ansprüche 16 bis 26, wobei der Eingangscontroller (600₀) Einrichtungen zur Speicherung der Prioritätskanaldaten hinsichtlich des Transfers der Daten zum Ausgangscontroller umfasst.
